# EUROPÄISCHE PATENTSCHRIFT

(11) **EP 1 801 136 B1**
(45) Veröffentlichungstag und Bekanntmachung des Hinweises auf die Patenterteilung: **24.11.2010**
(21) Anmeldenummer: 06025500.7
(22) Anmeldetag: 09.12.2006
(51) Int. Cl.: C08F 283/00, B01D 19/04, C10M 171/00

(54) **Silikonhaltige Pfropfmischpolymere auf Basis styroloxidbasierter Silikonpolyether**
Silicone containing graft polymers based on silicone polyethers of styrene oxide
Polymères greffés contenant du silicone à base de silicones polyethers d'oxyde de styrène

(30) Priorität: 23.12.2005 DE 102005061782
(43) Veröffentlichungstag der Anmeldung: 27.06.2007
(73) Patentinhaber: Evonik Goldschmidt GmbH, 45127 Essen (DE)
(72) Erfinder: Schwab, Peter, Dr., 45127 Essen (DE)

(56) Entgegenhaltungen:
- EP-A- 0 029 947
- EP-A- 0 098 803
- EP-A- 0 887 367

## Beschreibung

Die Erfindung beschreibt neue silikonhaltige Pfropfmischpolymere und Verfahren zu deren Herstellung. Insbesondere bezieht sie sich auf silikonhaltige Pfropfmischpolymere, die durch das gezielte Aufpfropfen von olefinischen Monomeren auf einen zum Teil styroloxidbasierten Silikonpolyether erhalten werden.

In den letzten Jahrzehnten haben sich industriell erzeugte Silikone zu einer bedeutenden und vielfältigen Produktgruppe entwickelt, die in fast allen Industriesektoren eine wichtige Rolle spielt und sich durch stetes Wachstum auszeichnet. Besonders die organomodifizierten Silikone haben durch ihre vielfältigen Gestaltungsmöglichkeiten dazu beigetragen, eine große Mannigfaltigkeit von Produkttypen zu ermöglichen und damit eine Vielzahl von Anwendungen zu erschließen.

Aufgrund der großen wirtschaftlichen Bedeutung ist eine Reihe von Methoden entwickelt worden, um derartige organomodifizierte Siloxane herzustellen. Dazu ist eine Verknüpfung von radikalischer Polymerisation und Silikonchemie aus vielerlei Hinsicht erstrebenswert. Die Vorteile der radikalischen Polymerisation liegen in der Vielzahl der einsetzbaren, auch in industriellem Maßstab verfügbaren Monomere, in der hohen Toleranz gegenüber funktionellen Gruppen, einschließlich Carboxyl-, Hydroxyl-, Amino- und Epoxy-Funktionen, im relativ geringen experimentellen Aufwand und den milden sowie unempfindlichen Reaktionsbedingungen. Allerdings ist das direkte Aufpfropfen organischer Olefine auf Dialkylsiloxane trotz Beschreibung in der Literatur aus thermodynamischer Sicht und aufgrund mangelnder Verträglichkeiten sehr ungünstig und führt überwiegend zur Bildung von Homopolymeren ohne chemische Bindung an den Siloxanrücken. Als Pfropfgrundlage eignen sich aber mit Polyether modifizierte Silikone, da die Ethergruppen durch Radikale erheblich leichter angreifbar sind. Somit können auf ethylenoxid- und besser noch propylenoxidhaltigen Silikonpolyethern durch Wasserstoffabstraktion Radikale erzeugt werden, von denen aus durch Addition an entsprechende vinylische Monomere eine Polymerkette gepfropft werden kann. Dies wird in DE 1645569 A beschrieben. Auch wenn in der Polyalkylenoxidkette sowohl PO als auch EO-Anteile enthalten sind, wird bei dem Verfahren eine sehr geringe Selektivität erreicht. In vielen Fällen ist es aber von besonderer Bedeutung, eine gewisse Kontrolle über die Pfropfstellen und damit die Topologie des Makromoleküls auszuüben. Durch den genaueren Strukturaufbau des Makromoleküls lassen sich wichtige Eigenschaften für bestimmte Anwendungen erst erreichen bzw. verbessern.

Aufgabe der vorliegenden Erfindung ist es daher, durch Verwendung von Polyetherketten mit benzylischen C-H Bindungen eine gezielte Pfropfung eines Silikonpolyethers zu ermöglichen. Überraschenderweise wurde nun gefunden, dass die Verwendung von teilweise aus Styroloxid aufgebauten Polyethern eine ausreichend kontrollierbare Selektivität zur Folge hat.

Die so hergestellten gepfropften Polyethersiloxane eignen sich für verschiedenste Anwendungen, in denen organisch modifizierte Polyethersiloxane eingesetzt werden. Sie können gegenüber statistisch gepfropften Polyethersiloxanen signifikante Eigenschaftsverbesserungen aufweisen. Der Vergleich mit statistisch gepfropften Polyethersiloxanen, deren Polyether nur aus Ethylenoxid und Propylenoxid aufgebaut sind, ergab eine deutliche Verbesserung der Langzeitwirksamkeit als Entschäumer und Entlüfter für nichtwässrige Systeme auf Basis von Mineralölen oder Syntheseölen.

Die vorteilhaften Eigenschaften der erfindungsgemäßen Polymeren führen im Ölbereich zu der erwünschten Eigenschaftskombination von Entschäumer und Entlüfter, die aber zusätzlich über Monate hinweg stabil bleibt und somit die Grundvoraussetzung für den Einsatz in Motoren und Maschinen schafft. Somit sind ebenfalls Gegenstand der Erfindung die Verwendung der Pfropfmischpolymere als Entschäumer und Entlüfter für nichtwässrige Systeme auf Basis von Mineralölen oder Syntheseölen. Dabei werden die Pfropfmischpolymeren in einer Konzentration von unter 150 ppm, bevorzugterweise zwischen 10 und 100 ppm, bezogen auf die Ölkomponente eingesetzt.

Die zur Herstellung der erfindungsgemäßen Mischpolymere verwendeten Silikonpolyether schließen alle Verbindungen ein, die aus einem Silikonanteil und einem Polyetheranteil bestehen, der mindestens eine Styroloxideinheit als Kettenbestandteil trägt, und in denen keine an Silicium gebundenen Wasserstoffatome enthalten sind.

Als Pfropfgrundlage geeignete Polyethersiloxane sind Siloxane, die Gruppen der Formel (V) enthalten: 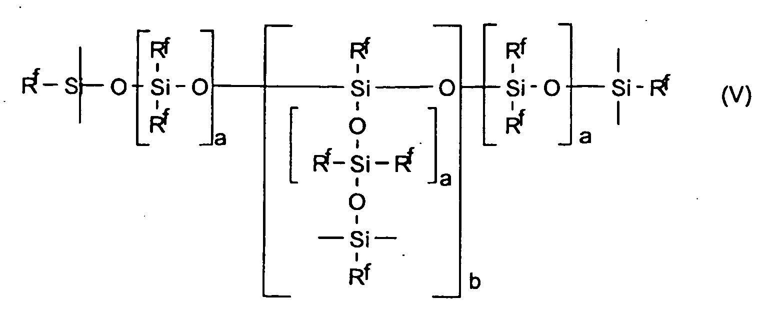 wobei der Rest
- R^{f}: der Rest R¹ sein kann, wobei
- R¹: ein Alkylrest mit 1 bis 16 C-Atomen, oder ein Arylrest ist,
oder
- R^{f}: der Rest R² oder R³ ist, mit der Maßgabe, dass mindestens ein Rest R^{f} der Rest R² ist, wobei
- R²: ein Polyetherrest der Formel VI

(F)_{q}[O(C₂H_{4-d}R'_{d}O)ₘ(CₓH₂ₓO)ᵣZ]w (VI)

ist, mit der Bedeutung
d 1 bis 3
m ≥ 1
q 0 oder 1
x 2 bis 10
r ≥ 0
w 1 bis 4
F ein Kohlenwasserstoffrest, der auch verzweigt sein kann,
R' ein einwertiger Kohlenwasserstoffrest, der aromatisch oder gegebenenfalls auch ein substituierter Aromat ist,
Z ein H-Atom oder ein einwertiger organischer Rest wie Alkyl oder Alkyl- oder Arylester ist,
- und R³: ein Polyetherrest der Formel VI

(F) _{q}[O(C₂H_{4-d}R'_{d}O)ₘ(CₓH₂ₓO)ᵣ]_{w} (VI)

sind, mit der Bedeutung
d 1 bis 3
m ≥ 0
q 0 oder 1
x 2 bis 10
r > 1
w 1 bis 4
F ein Kohlenwasserstoffrest, der auch verzweigt sein kann,
R' ein Wasserstoffrest, ein einwertiger Kohlenwasserstoffrest mit 1 bis 18 C-Atomen
Z ein H-Atom oder ein einwertiger organischer Rest wie Alkyl oder Alkyl- oder Arylester ist,
und wobei in Formel V
- b: eine Zahl von 0 bis 8 ist,
- a: eine Zahl von 1 bis 100 ist, wenn b eine Zahl von 6 bis 8 ist,
- a: eine Zahl von 1 bis 200 ist, wenn b eine Zahl von 3 bis 6 ist,
- a: eine Zahl von 1 bis 300 ist, wenn b eine Zahl von 0 bis 3 ist.

Die Werte von a und b sind als durchschnittliche Werte zu verstehen, da die erfindungsgemäß Silikonpolyether-Copolymere in Form von regelfalläquilibrierten Gemischen vorliegen. Besonders bevorzugt sind solche Silikonpolyether-Copolymere, bei denen alle Reste R¹ Methylreste sind.

Das Siloxangemisch kann geradkettig (b = 0) oder verzweigt sein (b > 0 bis 8). Der Wert von a kann erfahrungsgemäß nur in der angegebenen Weise mit Werten von b kombiniert werden, da ansonsten die erhöhte Viskosität eine Handhabung unmöglich macht.

Es ist dem Fachmann bekannt, dass die oben beschriebenen Silikonpolyether oft zusätzliche funktionelle und nichtfunktionelle Gruppen aufweisen können, so lange diese nicht mit dem radikalischen Polymerisationsprozess interferieren können. Beispiele sind siliciumgebundene Acyloxygruppen (Acetoxygruppen), Hydroxylgruppen und/oder Alkoxygruppen (Methoxygruppen), aber auch Substituenten an den an Silicium gebundenen Kohlenwasserstoffgruppen, wie z. B. Halogenatome oder Alkoxygruppen.

Die Monomeren A können unter Verwendung irgendeiner konventionellen synthetischen Methode homo- oder copolymerisiert werden. Beispielsweise können dies Lösungspolymerisation, Emulsionspolymerisation, umgekehrte Emulsionspolymerisation, Suspensionspolymerisation, umgekehrte Suspensionspolymerisation oder Fällungspolymerisation sein, ohne dass die verwendbaren Methoden darauf beschränkt sind. Die Pfropfreaktion kann in Gegenwart oder Abwesenheit von Lösungsmitteln erfolgen, wenn notwendig auch in Zwei- oder Mehrphasensystemen. Wichtige Voraussetzung ist lediglich die wechselseitige Löslichkeit der Reaktionspartner im Medium. Bei der Lösungspolymerisation kann Wasser, übliche organische Lösungsmittel oder die erfindungsgemäßen Silikonderivate B selbst als Lösungsmittel verwendet werden. Dieses letzte Verfahren wird jedoch bevorzugt.

Die Pfropfreaktion kann unter Normaldruck, Überdruck, oder Unterdruck durchgeführt werden.

Jegliche Monomere, ethylenisch ungesättigten Verbindung und jegliches polymeres Olefin mit mindestens einem Rest an Ungesättigkeit (wie Polymere des Butadiens oder Isoprens oder jegliche Art von Macromonomeren, einschließlich solcher die Siloxanketten enthalten) sind zur Herstellung der erfindungsgemäßen Pfropfmischpolymere geeignet.

Der Begriff ethylenisch ungesättigt bedeutet, dass die Monomere A zumindest eine polymerisierbare Kohlenstoff-Kohlenstoff Doppelbindung besitzen, die mono-, di-, tri-, oder tetrasubstituiert sein kann.

Die bevorzugten ethylenisch ungesättigten Monomere können durch die folgende allgemeine Formel (I) beschrieben werden:

X-C(O)CR⁷=CHR⁶ (I)

wobei X ausgewählt ist aus der Gruppe der Reste -OH, -OM, - OR⁸, NH₂, NHR⁸, N(R⁸)².

M ist ein Kation ausgewählt aus der Gruppe bestehend aus: Na+, K+, Mg++, Ca++, Zn++, NH4+, Alkylammonium, Dialkylammonium, Trialkylammonium und Tetraalkylammonium.

Die Reste R⁸ können identisch oder verschieden ausgewählt werden aus der Gruppe bestehend aus -H, C₁-C₄₀ linear- oder verzweigtkettige Alkylreste, N,N-Dimethylaminoethyl, 2-Hydroxyethyl, 2-Methoxyethyl, 2-Ethoxyethyl, Hydroxypropyl, Methoxypropyl oder Ethoxypropyl.

R⁷ und R⁶ sind unabhängig voneinander ausgewählt aus der Gruppe bestehend aus: -H, C₁-C₈ linear- oder verzweigtkettige Alkylketten, Methoxy, Ethoxy, 2-Hydroxyethoxy, 2-Methoxyethoxy und 2-Ethoxyethyl.

Repräsentative aber nicht limitierende Beispiele von geeigneten Monomeren sind zum Beispiel Ester und Amide.

Die Ester können abgeleitet sein von C₁-C₄₀ linearen, C₃-C₄₀ verzweigtkettigen, oder C₃-C₄₀ carbocyclischen Alkoholen, von mehrfachfunktionellen Alkoholen mit 2 bis etwa 10 Hydroxylgruppen wie Ethylenglycol, Hexylenglycol, Glycerin, und 1,2,6-Hexantriol, von Aminoalkoholen oder von Alkoholethern wie Methoxyethanol und Ethoxyethanol oder Polyethylenglykolen.

Besonders vorteilhaft hat sich die Verwendung von Monomeren A herausgestellt, die als Copolymerisate aus insbesondere Ethylacrylat, Methylacrylat, Hydroxyethylacrylat, n-Butylacrylat, Laurylacrylat, Ethylmethacrylat, Methylmethacrylat, Hydroxyethylmethacrylat, n-Butylmethacrylat und Laurylmethacrylat bestehen.

Ferner eignen sich N,N-Dialkylaminoalkylacrylate und - methacrylate und N-Dialkylaminoalkylacryl- und -Methacrylamide der allgemeinen Formel (II) 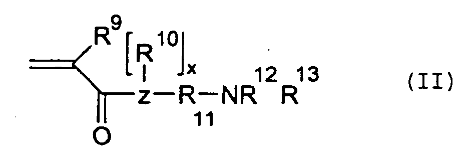 mit
- R⁹: H, Alkyl mit 1 bis 8 C-Atomen,
- R¹⁰: H, Methyl,
- R¹¹: Alkylen mit 1 bis 24 C-Atomen, optional substituiert durch Alkyl,
- R¹², R¹³: C₁-C₄₀-Alkylrest,
- Z: Stickstoff für x = 1 oder Sauerstoff für x = 0.

Die Amide können unsubstituiert, N-alkyl oder N-alkylamino monosubstituiert, oder N,N-dialkylsubstituiert oder N,N-dialkylamino disubstituiert sein, worin die Alkyl- oder Alkylaminogruppen von C₁-C₄₀ linearen, C₃-C₄₀ verzweigtkettigen, oder C₃-C₄₀ carbocyclischen Einheiten abgeleitet sind.

Bevorzugte Monomere der Formel (II) sind N,N-Dimethylaminomethyl(meth)acrylat, N,N-Diethylaminomethyl(meth)acrylat, N,N-Dimethylaminoethyl(meth)acrylat, N,N-Diethylaminoethyl-(meth)acrylat und N,N-Dimethylaminopropyl(meth)acrylat.

Ebenfalls verwendbare Monomere sind substituierte Acrylsäuren sowie Salze, Ester und Amide davon, wobei die Substituenten an den Kohlenstoffatomen in der zweiten oder dritten Position der Acrylsäure stehen und unabhängig voneinander ausgewählt sind aus der Gruppe bestehend aus C₁-C₄-Alkyl, -CN, COOH besonders bevorzugt Methacrylsäure-, Ethacrylsäure- und 3-Cyanoacrylsäurederivate. Diese Salze, Ester und Amide dieser substituierten Acrylsäuren können wie oben für die Salze, Ester und Amide der Acrylsäure beschrieben ausgewählt werden.

Andere geeignete Monomere sind Vinyl- und Allylester von C₁-C₄₀ linearen, C₃-C₄₀ verzweigtkettigen oder C₃-C₄₀ carbocyclische Carbonsäuren (z.B.: Vinylacetat, Vinylpropionat, Vinylneononanoat, Vinylneoundekansäure oder t-Butyl-benzoesäure-vinylester), Vinyl- oder Allylhalogenide, bevorzugt Vinylchlorid und Allylchlorid, Vinylether, bevorzugt Methyl-, Ethyl-, Butyl-, oder Dodecylvinylether, Vinylformamid, Vinylmethylacetamid, Vinylamin, Vinyllactame, bevorzugt Vinylpyrrolidon und Vinylcaprolactam, Vinyl- oder Allyl-substituierte heterocyclische Verbindungen, bevorzugt Vinylpyridin, Vinyloxazolin und Allylpyridin.

Weiterhin sind N-Vinylimidazole der allgemeinen Formel (III) geeignet, worin R¹⁴ bis R¹⁶ unabhängig voneinander für Wasserstoff, C₁-C₄-Alkyl oder Phenyl steht:

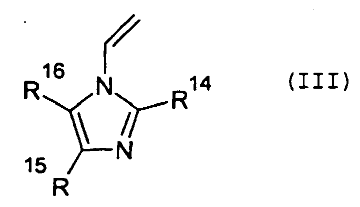

Weitere geeignete Monomere sind Diallylamine der allgemeinen Formel (IV) 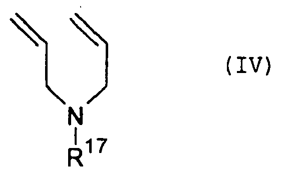 mit
R¹⁷ C₁-C₂₄-Alkyl.

Weitere geeignete Monomere sind Vinylidenchlorid und Kohlenwasserstoffe mit mindestens einer Kohlenstoff-Kohlenstoff Doppelbindung, bevorzugt Styrol, alpha-Methylstyrol, tert.-Butylstyrol, Butadien, Isopren, Cyclohexadien, Ethylen, Propylen, 1-Buten, 2-Buten, Isobutylen, Vinyttoluol, sowie Mischungen dieser Monomere. Zusätzlich zu den oben genannten Monomeren können als Monomere sogenannte Makromonomere wie zum Beispiel silikonhaltige Makromonomere mit ein oder mehreren radikalisch polymerisierbaren Gruppen oder Alkyloxazolinmakromonomere eingesetzt werden wie sie zum Beispiel in der EP-A-408 311 beschrieben sind.

Des Weiteren können fluorhaltige Monomere wie sie beispielsweise in der EP-B-558 423 beschrieben sind, vernetzend wirkende oder das Molekulargewicht regelnde Verbindungen in Kombination oder alleine eingesetzt werden.

Als Regler können die üblichen dem Fachmann bekannten Verbindungen wie zum Beispiel Schwefelverbindungen (z.B.: Mercaptoethanol, 2-Ethylhexylthioglykolat, Thioglykolsäure oder Dodecylmercaptan) sowie Tribromchlormethan oder andere Verbindungen die regelnd auf das Molekulargewicht der erhaltenen Polymerisate wirken, verwendet werden. Es können gegebenenfalls auch thiolgruppenhaltige Silikonverbindungen eingesetzt werden. Bevorzugt werden aber silikonfreie Regler eingesetzt und die Synthesebedinungen so eingestellt, dass keine Regler verwendet werden müssen.

Als vernetzende Monomere können Verbindungen mit mindestens zwei ethylenisch ungesättigten Doppelbindungen eingesetzt werden wie zum Beispiel Ester von ethylenisch ungesättigten Carbonsäuren, wie Acrylsäure oder Methacrylsäure und mehrwertigen Alkoholen, Ether von mindestens zweiwertigen Alkoholen wie zum Beispiel Vinylether oder Allylether. Außerdem geeignet sind geradkettige oder verzweigte, lineare oder cyclische aliphatische oder aromatische Kohlenwasserstoffe, die aber mindestens zwei Doppelbindungen tragen, welche bei den aliphatischen Kohlenwasserstoffen nicht konjugiert sein dürfen. Ferner geeignet sind Amide der Acryl- und Methacrylsäure und N-Allylamine von mindestens zweiwertigen Aminen wie zum Beispiel (1,2-Diaminoethan, 1,3-Diaminopropan). Ferner sind Triallylamin oder entsprechende Ammoniumsalze, N-Vinylverbindungen von Harnstoffderivaten, mindestens zweiwertigen Amiden, Cyanuraten oder Urethanen. Weitere geeignete Vernetzer sind Divinyldioxan, Tetraallylsilan oder Tetravinylsilan.

Besonders bevorzugte Vernetzer sind beispielsweise Methylenbisacrylamid, Triallylamin und Triallylammoniumsalze, Divinylimidazol, N,N'-Divinylethylenharnstoff, Umsetzungsprodukte mehrwertiger Alkohole mit Acrylsäure oder Methacrylsäure, Methacrylsäureester und Acrylsäureester von Polyalkylenoxiden oder mehrwertigen Alkoholen die mit Ethylenoxid und/oder Propylenoxid und/oder Epichlorhydrin umgesetzt worden sind. Wie dem Fachmann geläufig ist, können aber die Molekulargewichte so eingestellt werden, dass keine Vernetzer notwendig sind.

Jegliche Kombination aus den genannten Monomeren kann in beliebigen Mischungsverhältnissen eingesetzt werden. Einzige Voraussetzung ist nur deren Verträglichkeit. Insbesondere können auch solche Kombinationen gewählt werden, in denen die Monomere unterschiedliche Reaktivitäten aufweisen und somit Gradientencopolymere entstehen.

Die erfindungsgemäßen Pfropfmischpolymere können jegliche relative Mengen Olefin aufgepfropft auf dem Polyethersiloxan enthalten. Bevorzugte Mengenverhältnisse variieren je nach Anwendung, hängen von der Menge an Styroloxid in der Pfropfgrundlage ab und liegen im Allgemeinen zwischen 10 und 10000 Gewichts% des jeweils zugrunde liegenden Polyethersiloxans. Bevorzugt werden zwischen 2 und 500 Gewichts-% der ungesättigten Verbindungen A in Gegenwart des Silikonpolyethers polymerisiert.

Ein Stoff, der unter den Reaktionsbedingungen freie Radikale bildet, ist wesentliche Voraussetzung und Bestandteil des Pfropfvorgangs zur Herstellung der erfindungsgemäßen Pfropfmischpolymere. Alle Mittel, die prinzipiell geeignet sind, freie Radikale zu erzeugen können eingesetzt werden, u.a. aber nicht ausschließlich ionisierende Bestrahlung, organische Peroxyverbindungen, Azo-Verbindungen und anorganische Radikalbildner.
Zur besseren Dosierung oder Verträglichkeit der Radikalbildner können Lösungsmittel zum Einsatz kommen, die mit der radikalischen Polymerisation nicht interferieren.

Ein weiterer Gegenstand der Erfindung sind Pfropfmischpolymere die ungesättigten Monomeren A zu 2 bis 100 Ges.-% enthalten, ausgewählt aus der Gruppe der Derivate der Acrylsäure und Methacrylsäure, Vinylether, Vinylalkohole, Vinylester, Styrol, Derivate des Styrols, sowie Mischungen dieser Monomere.

Ein weiterer Gegenstand der Erfindung sind Pfropfmischpolymere die Derivate der Acrylsäure und Methacrylsäure gekennzeichnet durch die allgemeine Formel I

R⁸O-C(O)CR⁷=CHR⁶ (I)

beschrieben werden, mit der Bedeutung
R⁷ und R⁶ unabhängig voneinander ausgewählt aus der Gruppe bestehend aus: -H, C₁-C₈ linear- oder verzweigtkettige Alkylketten, Methoxy, Ethoxy, 2-Hydroxyethoxy, 2-Methoxyethoxy und 2-Ethoxyethyl,

Ein weiterer Gegenstand der Erfindung sind Pfropfmischpolymere die ungesättigten Monomeren A zu 2 bis 100 Ges.-% enthalten, ausgewählt sind aus der Gruppe von Styrol, Methylstyrol, tert.-Butylstyrol und anderer Styrolderivate sowie aus Mischungen dieser Monomere.

Ein weiterer Gegenstand der Erfindung sind Pfropfmischpolmere die ungesättigten Monomeren A zu 2 bis 100 Gew.-% enthalten, ausgewählt sind aus der Gruppe der Vinyl- und Allylester von C1-C40 linearen, C3-C40 verzweigtkettigen oder C3-C40 carbocyclische Carbonsäuren (z.B.: Vinylacetat, Vinylpropionat, Vinylneononanoat, Vinylneoundekansäure oder t-Butyl-benzoesäure-vinylester), Vinyl- oder Allylhalogenide sowie aus Mischungen dieser Monomere.

Die für die Reaktion gewählte Temperatur hängt von der zum Einsatz kommenden radikalbildenden Verbindung ab. Wird die Radikalbildung thermisch induziert, spielt die Halbwertszeit des Zerfalls des Primärteilchens eine entscheidende Rolle und kann so gewählt werden, dass sich in der Reaktionsmischung immer ein gewünschtes Verhältnis von freien Radikalen einstellt. Geeignete Temperaturbereiche liegen zwischen 30 °C und 225°C, nach oben begrenzt durch die thermische Zersetzung der Pfropfgrundlage.

Die in der Formel VI beschriebenen Polyether werden durch Umsetzung eines Startalkohols, der bevorzugt Allylalkohol oder Alkylalkohol ist, durch Anlagerung von Monomeren gewonnen. Geeignet sind Ethylenoxid, Propylenoxid, Verbindung aus der Gruppe Tetrahydrofuran, 1,2-Epoxybutan (n-Butylenoxid), 2,3-Epoxybutan (iso-Butylenoxid), Dodecyloxid, sowie Stryoloxid und/oder Methylstyroloxid.

Dabei kann die Verteilung der Monomere beliebig gewählt sein, so dass beispielsweise Blöcke enthalten sein können. Außerdem ist auch eine Mischung der Monomeren einsetzbar, so dass Polyether erhalten werden, in denen die Einheiten in statistischer Verteilung vorliegen.

Die Reste werden an das Molekül des Polysiloxans durch Addition an SiH-Gruppen des Polysiloxans in Anwesenheit eines Hydrosilylierungskatalysators oder durch die Umsetzung von HO-funktionnellen Polyetherresten mit SiCl- oder SiH-Gruppen eingeführt. Nach dem Stand der Technik können Platin, Palladium oder Rhodium, Amin oder Boran-Katalysatoren verwendet werden.

### Ausführungsbeispiele:

### Bezugsbeispiel 1:

### Herstellung eines Styroloxidbasierten Polyethers:

Styroloxid/Ethylenoxid haltiges Blockcopolymer (MW = 600, 70% EO-Anteil) wurde hergestellt. Es wurden 58 g Allylalkohol und KOH in einem Druckreaktor vorgelegt und auf 120 °C aufgeheizt. Anschließend wurden 120 g Styroloxid über mehrere Stunden und nach einer Nachreaktionszeit von 1h 440 g Ethylenoxid bei 100 °C über mehrere Stunden zudosiert. Nach einer weiteren Nachreaktionszeit von 1h bei 100 °C und Abkühlen auf 80 °C wurde das Reaktionsgemisch neutralisiert und abgefüllt.

### Bezugsbeispiel 2:

Herstellung eines Styroloxidbasierten Polyethers Ethylenoxid/Styroloxid haltiges Blockcopolymer (MW = 600, 70% EO-Anteil) wurde hergestellt. Es wurden 58 g Allylalkohol und KOH in einem Druckreaktor vorgelegt und auf 100 °C aufgeheizt. Anschließend wurden über mehrere Stunden 440 g Ethylenoxid und nach einer Nachreaktionszeit von 1h 120 g Styroloxid bei 120 °C über mehrere Stunden zudosiert. Nach einer weiteren Nachreaktionszeit von 1h bei 120 °C und Abkühlen auf 80 °C wurde das Reaktionsgemisch neutralisiert und abgefüllt.

### Bezugsbeispiel 3:

### Hydrosilylierung eines Polysiloxans

In einem Dreihalskolben wurden 2,6 mol des in Bezugsbeispiel 1 hergestellten Polyethers zusammen mit 1 mol eines α,ω-SiH Siloxan (N = 50, SiH = 0,55) und 10 ppm handelsüblichem Platin-Katalysator vorgelegt und unter Rühren auf 90 °C aufgeheizt. Nach 1 h Nachreaktion bei 120 °C, wurde das klare Produkt unter Ölpumpenvakuum (< 5 mbar) destilliert, filtiert und abgefüllt.

### Bezugsbeispiel 4:

### Hydrosilylierung eines Polysiloxans

In einem Dreihalskolben wurden 6,5 mol des in Bezugsbeispiel 2 hergestellten Polyethers zusammen mit 1 mol eines seitenständigen-SiH Siloxans (20,5/5, SiH = 2,52) und 10 ppm handelsüblichem Platin-Katalysator vorgelegt und unter Rühren auf 90 °C aufgeheizt. Nach 1 h Nachreaktion bei 120 °C, wurde das klare Produkt unter Ölpumpenvakuum (< 5 mbar) destilliert, filtiert und abgefüllt.

### Beispiel 1:

Umsetzung von einem Ethylenoxid/Styroloxidhaltigen Silikonpolyether mit Styrol unter Verwendung von Trigonox^{®} 117 als Initiator.

100 g Silikonpolyether gemäß Bezugsbeispiel 4 wurden in einem Vierhalskolben ausgestattet mit Rührer, Intensivkühler, Thermometer und Tropftrichter unter Stickstoffatmosphäre auf 140 °C aufgeheizt. Bei Erreichen der Temperatur wurden 20 g Styrol und 1,8 g Trigonox 117 innerhalb von 60 Minuten zugetropft, wobei eine exotherme Reaktion beobachtet wurde. Die Reaktionsmischung wurde daraufhin eine Stunde bei 150 °C gehalten. Anschließend wurde unter Verwendung einer Destillationsbrücke Restmonomere bei 145 °C und Ölpumpenvakuum abdestilliert. Man erhielt ein farbloses, klares Produkt. Das 1H-NMR Spektrum des Produktes zeigte, dass die benzylische Position am Polyether (δ = 4.7 - 4.9 ppm) bevorzugt gepfropft wurde.

### Beispiel 2:

Umsetzung von einem Ethylenoxid/Styroloxidhaltigen Silikonpolyether mit BMA unter Verwendung von Trigonox^{®} B als Initiator.

100 g Silikonpolyether aus Bezugsbeispiel 1 wurden in einem Vierhalskolben ausgestattet mit Rührer, Intensivkühler, Thermometer und Tropftrichter unter Stickstoffatmosphäre auf 160 °C aufgeheizt. Bei Erreichen der Temperatur wurden 20 g BMA und 3,6 g Trigonox B innerhalb von 60 Minuten zugetropft, wobei eine exotherme Reaktion beobachtet wurde. Die Reaktionsmischung wurde daraufhin eine Stunde bei 160 °C gehalten. Anschließend wurde unter Verwendung einer Destillationsbrücke Restmonomere bei 145 °C und Ölpumpenvakuum abdestilliert. Man erhielt ein gelbliches, klares Produkt. Das 1H-NMR Spektrum des Produktes zeigte, dass die benzylische Position am Polyether (δ = 4.7 - 4.9 ppm) bevorzugt gepfropft wurde.

### Beispiel 3:

Umsetzung von einem Ethylenoxid/Styroloxidhaltigen Silikonpolyether mit Butylacrylat unter Verwendung von Trigonox^{®} D-C50 als Initiator.

100 g Silikonpolyether aus Bezugsbeispiel 1 wurden in einem Vierhalskolben ausgestattet mit Rührer, Intensivkühler, Thermometer und Tropftrichter unter Stickstoffatmosphäre auf 140 °C aufgeheizt. Bei Erreichen der Temperatur wurden 20 g Butylacrylat und 5,4 g Trigonox 201 innerhalb von 60 Minuten zugetropft, wobei eine exotherme Reaktion beobachtet wurde. Die Reaktionsmischung wurde daraufhin eine Stunde bei 150 °C gehalten. Anschließend wird unter Verwendung einer Destillationsbrücke Restmonomere bei 145 °C und Ölpumpenvakuum abdestilliert. Man erhielt ein gelbliches, klares Produkt. Das 1H-NMR Spektrum des Produktes zeigte, dass die benzylische Position am Polyether (δ = 4.7 - 4.9 ppm) bevorzugt gepfropft wurde.

### Beispiel 4:

Umsetzung von einem Ethylenoxid/Styroloxidhaltigen Silikonpolyether mit Methacrylat und Methylmethacrylat unter Verwendung von Perkadox^{®} 16 als Initiator.

100 g Silikonpolyether aus Bezugsbeispiel 1 wurden in einem Vierhalskolben ausgestattet mit Rührer, Intensivkühler, Thermometer und Tropftrichter unter Stickstoffatmosphäre auf 82 °C aufgeheizt. Bei Erreichen der Temperatur wurden 20 g einer 1:1 Mischung aus Methacrylat und Methylmethacrylat und 5,4 g Perkadox 16 innerhalb von 60 Minuten zugetropft, wobei eine exotherme Reaktion beobachtet wurde. Die Reaktionsmischung wurde daraufhin eine Stunde bei 100 °C gehalten. Anschließend wurde unter Verwendung einer Destillationsbrücke Restmonomere bei 150 °C und Ölpumpenvakuum abdestilliert. Man erhielt ein farbloses, klares Produkt. Das 1H-NMR Spektrum des Produktes zeigte, dass die benzylische Position am Polyether (δ = 4.7 - 4.9 ppm) bevorzugt gepfropft wurde.

Diese Produkte wurden anwendungstechnisch in dem ASTM 892 Schaumtest überprüft. Außerdem wurde das Luftabscheidevermögen nach der Impinger-Methode überprüft. Verglichen wurden die erfindungsgemäß hergestellten Produkte mit gepfropften Silikonpolyethern, deren Polyether nur aus Ethylenoxid und Propylenoxid aufgebaut sind. Als Ölformulierung wurde ein Mineralöl eingesetzt, welches alle Additive bis auf den Entschäumer enthielt. Der Entschäumer wurde mit 20 ppm eingesetzt.

Ergebnisse im Schaumtest nach ASTM 892 in einem Mineralöl:

| Entschäumer | Test 1 (bei 25°C) | Test 2 (bei 93°C) | Test 1 (bei 25°C) Nach 3 Monaten | Test 2 (bei 93°C) Nach 3 Monaten |
|---|---|---|---|---|
| Mineralöl ohne Entschäumer | 500 ml Schaum 312 Sekunden Zerfallszeit | 90 ml Schaum 23 Sekunden Zerfallszeit | 520 ml Schaum > 300 Sekunden Zerfallszeit | 100 ml Schaum 30 Sekunden Zerfallszeit |
| Mineralöl mit 20 ppm Acrylatentschäumer | 50 ml Schaum 5 Sekunden Zerfallszeit | 30 ml Schaum 0 Sekunden Zerfallszeit | 80 ml Schaum 20 Sekunden Zerfallszeit | 65 ml Schaum 11 Sekunden Zerfallszeit |
| Mineralöl mit 20 ppm statistisch gepfropftem Silikonpolyether | 0 ml Schaum 0 Sekunden Zerfallszeit | 0 ml Schaum 0 Sekunden Zerfallszeit | 200 ml Schaum 86 Sekunden Zerfallszeit | 85 ml Schaum 21 Sekunden Zerfallszeit |
| Mineralöl mit 20 ppm erfindungsgemäßem gepfropften Silikonpolyether aus Beispiel 4 | 0 ml Schaum 0 Sekunden Zerfallszeit | 0 ml Schaum 0 Sekunden Zerfallszeit | 0 ml Schaum 0 Sekunden Zerfallszeit | 0 ml Schaum 0 Sekunden Zerfallszeit |

## Patentansprüche

1. Pfropfmischpolymere hergestellt durch Aufpfropfen von ethylenisch ungesättigten Verbindungen A auf Silikonpolyether B, die aus einem Silikonanteil wobei der Silikonanteil keine an Silizium gebundenen Wasserstoffatome enthält,
und einem Polyetheranteil bestehen, der mindestens eine Styroloxideinheit als Kettenbestandteil trägt, in Gegenwart eines freie Radikale entwickelnden Mittels.

2. Pfropfmischpolymere nach Anspruch 1 **dadurch gekennzeichnet, dass** die als Pfropfgrundlage eingesetzten Silikonpolyether B durch die Formel V 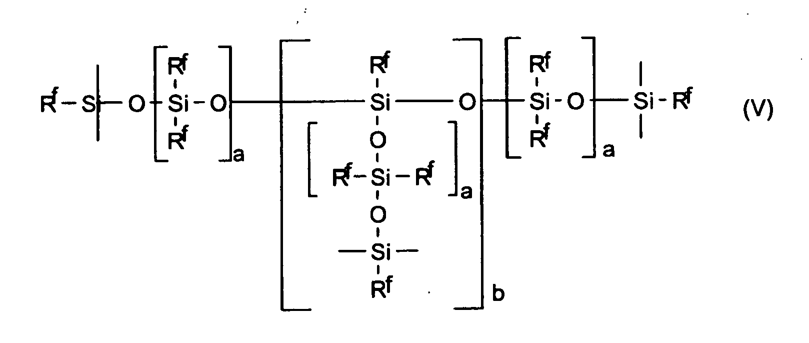 beschrieben werden, wobei
R^{f} der Rest R¹ sein kann, und
R¹ ein Alkylrest mit 1 bis 16 C-Atomen, oder ein Arylrest ist,
oder
R^{f} der Rest R² oder R³ ist, mit der Maßgabe, dass mindestens ein Rest R^{f} der Rest R² ist, wobei
R² ein Polyetherrest der Formel VI
(F)_{q}[O(C₂H_{4-d}R'_{d}O)ₘ(CₓH₂ₓO)ᵣZ]_{w} (VI)
ist, mit der Bedeutung
d 1 bis 3
m ≥ 1
q 0 oder 1
x 2 bis 10
r ≥ 0
w 1 bis 4
F ein Kohlenwasserstoffrest ist, der auch verzweigt sein kann,
R' ein einwertiger Kohlenwasserstoffrest, der aromatisch oder gegebenenfalls auch ein substituierter Aromat ist,
Z ein H-Atom oder ein einwertiger organischer Rest wie Alkyl oder Alkyl- oder Arylester ist,
und R³ ein Polyetherrest der Formel VI
(F)_{q}[O(C₂H_{4-d}R'_{d}O)ₘ(CₓH₂ₓO)ᵣZ]_{w} (VI)
ist, mit der Bedeutung
d 1 bis 3
m ≥ 0
q 0 oder 1
x 2 bis 10
r > 1
w 1 bis 4
F ein Kohlenwasserstoffrest, der auch verzweigt sein kann,
R' ein Wasserstoffrest, ein einwertiger Kohlenwasser- stoffrest mit 1 bis 18 C-Atomen,
Z ein H-Atom oder ein einwertiger organischer Rest wie Alkyl oder Alkyl- oder Arylester ist,
und wobei in Formel V
b eine Zahl von 0 bis 8 ist,
a eine Zahl von 1 bis 100 ist, wenn b eine Zahl von 6 bis 8 ist,
a eine Zahl von 1 bis 200 ist, wenn b eine Zahl von 3 bis 6 ist,
a eine Zahl von 1 bis 300 ist, wenn b eine Zahl von 0 bis 3 ist.

3. Pfropfmischpolymere nach Anspruch 1 und 2 **dadurch gekennzeichnet, dass** die als Pfropfgrundlage eingesetzten Silikonpolyether B durch die Formel V beschrieben werden, wobei alle Reste R¹ Methylreste sind.

4. Pfropfmischpolymere nach Anspruch 1 bis 3 **dadurch gekennzeichnet, dass** die ethylenisch ungesättigte Verbindung A aus der Gruppe der ethylenisch ungesättigten Monomere ausgewählt ist.

5. Pfropfmischpolymere nach Anspruch 1 bis 3 **dadurch gekennzeichnet, dass** die ethylenisch ungesättigten Verbindungen A aus einer Mischung aus mehreren ethylenisch ungesättigten Monomeren A ausgewählt sind.

6. Pfropfmischpolymere nach Anspruch 1 bis 3 **dadurch gekennzeichnet, dass** die ethylenisch ungesättigte Verbindung A aus der Gruppe der polymeren Olefine mit mindestens einem Rest an Ungesättigtkeit ausgewählt ist.

7. Pfropfmischpolymere nach Anspruch 1 bis 3 **dadurch gekennzeichnet, dass** die ethylenisch ungesättigten Verbindungen A aus einer Mischung aus mehreren ethylenisch ungesättigten Monomeren A und aus der Gruppe der polymeren Olefine mit mindestens einem Rest an Ungesättigtheit ausgewählt sind.

8. Pfropfmischpolymerisat nach Anspruch 1 bis 7 **dadurch gekennzeichnet, dass** zwischen 2 und 500 Gew.-% der ungesättigten Verbindungen A in Gegenwart des Silikonpolyethers polymerisiert werden.

9. Propfmischpolymere nach Anspruch 1 bis 8 **dadurch gekennzeichnet, dass** vernetzend wirkende Verbindungen ausgewählt sind aus der Gruppe der Derivate von mindestens zwei ethylenisch ungesättigten Doppelbindungen aufweisenden
• Estern von ethylenisch ungesättigten Carbonsäuren,
• Ethern von mindestens zweiwertigen Alkoholen, Vinylether oder Allylether,
• geradkettigen oder verzweigten, linearen oder cyclischen aliphatischen oder aromatischen Kohlenwasserstoffen, die aber mindestens zwei Doppelbindungen tragen, welche bei den aliphatischen Kohlenwasserstoffen nicht konjugiert sein dürfen,
• Amide der Acryl- und Methacrylsäure und N-Allylamine von mindestens zweiwertigen Aminen, Triallylamin oder Triallylammoniumsalze,
• N-Vinylverbindungen von Harnstoffderivaten, mindestens zweiwertigen Amiden, Cyanuraten oder Urethanen,
• Divinyldioxan, Tetraallylsilan oder Tetravinylsilan, sowie Mischungen dieser Monomere, eingesetzt werden.

10. Pfropfmischpolymere nach einem der Ansprüche 1 bis 9, **dadurch gekennzeichnet, dass** die Derivate der Acrylsäure und Methacrylsäure durch die allgemeine Formel I
X-C(O)CR⁷=CHR⁶ (I)
wobei X ausgewählt ist aus der Gruppe der Reste -OH, -OM, -OR⁸, NH₂, NHR⁸, N(R⁸)²,
M ist ein Kation ausgewählt aus der Gruppe Na⁺, K⁺, Mg⁺⁺, Ca⁺⁺, Zn⁺⁺, NH⁴⁺, Alkylammonium, Dialkylammonium, Trialkylammonium und Tetraalkylammonium und
die Reste R⁸ identisch oder verschieden sein können, ausgewählt aus der Gruppe bestehend aus -H, C₁-C₄₀ linear- oder verzweigtkettige Alkylreste, N,N-Dimethylaminoethyl, 2-Hydroxyethyl, 2-Methoxyethyl, 2-Ethoxyethyl, Hydroxypropyl, Methoxypropyl oder Ethoxypropyl und R⁷ und R⁶ unabhängig voneinander ausgewählt aus der Gruppe bestehend aus -H, C₁-C₈ linear- oder verzweigtkettige Alkylketten, Methoxy, Ethoxy, 2-Hydroxyethoxy, 2-Methoxyethoxy und 2-Ethoxyethyl sind.

11. Pfropfmischpolymere nach einem der Ansprüche 1 bis 8, **gekennzeichnet dadurch, dass** die ungesättigten Monomeren A zu 2 bis 100 Gew.-% ausgewählt sind aus der Gruppe von und anderer Styrolderivate sowie Mischungen dieser Monomere.

12. Pfropfmischpolymere nach einem der Ansprüche 1 bis 9, **gekennzeichnet dadurch dass** die ungesättigten Monomeren A zu 2 bis 100 Gew.-% ausgewählt sind aus der Gruppe der vinyl- und Allylester von C₁-C₄₀ linearen, C₃-C₄₀ verzweigtkettigen oder C₃-C₄₀ carbocyclische Carbonsäuren (z.B.: Vinylacetat, Vinylpropionat, Vinylneononanoat, Vinylneoundekansäure oder *t*-Butyl-benzoesäure-vinylester), Vinyl- oder Allylhalogenide sowie aus Mischungen dieser Monomere.

13. Verwendung von gepfropften Pfropfmischpolymeren gemäß den Ansprüchen 1 bis 12 als Entschäumer und Entlüfter für nichtwässrige Systeme auf Basis von Mineralölen oder Syntheseölen.

14. Verwendung der gepfropften Pfropfmischpolymeren gemäß Anspruch 13 in einer Konzentration von unter 150 ppm, bevorzugterweise zwischen 10 und 100 ppm, bezogen auf die Ölkomponente.

## Claims

1. Graft copolymers prepared by grafting ethylenically unsaturated compounds A onto silicone polyethers B which consist of a silicone moiety, where the silicone moiety does not contain any hydrogen atoms bonded to silicon, and a polyether moiety which bears at least one styrene oxide unit as a chain constituent in the presence of an agent which produces free radicals.

2. Graft copolymer according to Claim 1, **characterized in that** the silicone polyethers B used as the graft base are described by the formula V 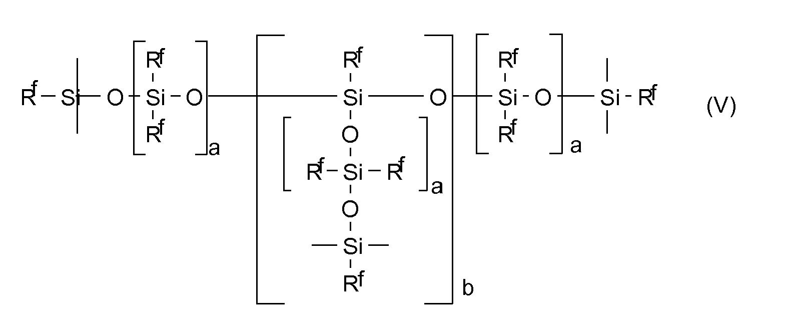 where
R^{f} may be the R¹ radical, and
R¹ is an alkyl radical having from 1 to 16 carbon atoms or an aryl radical,
or
R^{f} is the R² or R³ radical, with the proviso that at least one R^{f} radical is the R² radical, where
R² is a polyether radical of the formula VI
(F)_{q}[O(C₂H_{4-d}R'_{d}O)ₘ(CₓH₂ₓO)ᵣZ]_{w} (VI)
where
d is from 1 to 3
m is ≥ 1
q is 0 or 1
x is from 2 to 10
r is ≥ 0
w is from 1 to 4
F is a hydrocarbon radical which may also be branched,
R' is a monovalent hydrocarbon radical which is aromatic or optionally also a substituted aromatic,
Z is a hydrogen atom or a monovalent organic radical such as alkyl or alkyl ester or aryl ester,
and R³ is a polyether radical of the formula VI
(F)_{q}[O(C₂H_{4-d}R'_{d}O)ₘ(CₓH₂ₓO)ᵣZ]_{w} (VI)
where
d is from 1 to 3
m is ≥ 0
q is 0 or 1
x is from 2 to 10
r is > 1
w is from 1 to 4
F is a hydrocarbon radical which may also be branched,
R' is a hydrogen radical, a monovalent hydrocarbon radical having from 1 to 18 carbon atoms,
Z is a hydrogen atom or a monovalent organic radical such as alkyl or alkyl ester or aryl ester,
and where, in formula V,
b is from 0 to 8,
a is from 1 to 100 when b is from 6 to 8,
a is from 1 to 200 when b is from 3 to 6,
a is from 1 to 300 when b is from 0 to 3.

3. Graft copolymers according to Claim 1 and 2, **characterized in that** the silicone polyethers B used as the graft base are described by the formula V where all R¹ radicals are methyl radicals.

4. Graft copolymers according to Claim 1 to 3, **characterized in that** the ethylenically unsaturated compound A is selected from the group of the ethylenically unsaturated monomers.

5. Graft copolymers according to Claim 1 to 3, **characterized in that** the ethylenically unsaturated compounds A are selected from a mixture of a plurality of ethylenically unsaturated monomers A.

6. Graft copolymers according to Claim 1 to 3, **characterized in that** the ethylenically unsaturated compound A is selected from the group of the polymeric olefins having at least one radical of unsaturation.

7. Graft copolymers according to Claim 1 to 3, **characterized in that** the ethylenically unsaturated compounds A are selected from a mixture of a plurality of ethylenically unsaturated monomers A and from the group of polymeric olefins having at least one radical of unsaturation.

8. Graft copolymer according to Claim 1 to 7, **characterized in that** between 2 and 500% by weight of the unsaturated compounds A are polymerized in the presence of the silicone polyether.

9. Graft copolymers according to Claim 1 to 8, **characterized in that** crosslinking compounds selected from the group of the derivatives of the following compounds having at least two ethylenically unsaturated bonds:
• esters of ethylenically unsaturated carboxylic acids,
• ethers of at least dihydric alcohols, vinyl ethers or allyl ethers,
• straight-chain, branched or cyclic, aliphatic or aromatic hydrocarbons which, however, bear at least two double bonds which must not be conjugated in the case of aliphatic hydrocarbons,
• amides of acrylic and methacrylic acid, and N-allylamines of at least difunctional amines, triallylamine or triallylammonium salts,
• N-vinyl compounds of urea derivatives, at least difunctional amides, cyanurates or urethanes,
• divinyldioxane, tetraallylsilane or tetravinylsilane,
and mixtures of these monomers, are used.

10. Graft copolymers according to any of Claims 1 to 9, **characterized in that** the derivatives of acrylic acid and methacrylic acid are defined by the general formula I
X-C(O)CR⁷=CHR⁶ (I)
where X is selected from the group of the -OH, -OM, -OR⁸, NH₂, NHR⁸, N(R⁸)₂ radicals,
M is a cation selected from the group of Na⁺, K⁺, Mg⁺⁺, Ca⁺⁺, Zn⁺⁺, NH₄⁺, alkylammonium, dialkylammonium, trialkylammonium and tetraalkylammonium, and
the R⁸ radicals may be identical or different and are selected from the group consisting of -H, C₁-C₄₀ linear or branched-chain alkyl radicals, N,N-dimethylaminoethyl, 2-hydroxyethyl, 2-methoxyethyl, 2-ethoxyethyl, hydroxypropyl, methoxypropyl or ethoxypropyl, and
R⁷ and R⁶ are each independently selected from the group consisting of -H, C₁-C₈ linear or branched alkyl chains, methoxy, ethoxy, 2-hydroxyethoxy, 2-methoxyethoxy and 2-ethoxyethyl.

11. Graft copolymers according to one of Claims 1 to 8, **characterized in that** the unsaturated monomers A are selected to an extent of from 2 to 100% by weight from the group of other styrene derivatives, and mixtures of these monomers.

12. Graft copolymers according to one of Claims 1 to 9, **characterized in that** the unsaturated monomers A are selected to an extent of from 2 to 100% by weight from the group of the vinyl and allyl esters of C₁-C₄₀ linear, C₃-C₄₀ branched-chain or C₃-C₄₀ carbocyclic carboxylic acids (e.g.: vinyl acetate, vinyl propionate, vinyl neononanoate, vinylneoundecanoic acid or vinyl t-butylbenzoate), vinyl or allyl halides, and from mixtures of these monomers.

13. Use of grafted copolymers according to Claims 1 to 12 as defoamers and deaerators for nonaqueous systems based on mineral oils or synthetic oils.

14. Use of the grafted graft copolymers according to Claim 13 in a concentration of below 150 ppm, more preferably between 10 and 100 ppm, based on the oil components.

## Revendications

1. Copolymères greffés, préparés par greffage de composés éthyléniquement insaturés A sur des silicone-polyéthers B qui sont constitués par une proportion de silicone, où la proportion de silicone ne contient pas d'atomes d'hydrogène liés au silicium, et une proportion de polyéther, qui porte au moins une unité d'oxyde de styrène comme constituant de chaîne, en présence d'un agent développant des radicaux libres.

2. Copolymères greffés selon la revendication 1, **caractérisés en ce que** les silicone-polyéthers B utilisés comme base de greffage sont décrits par la formule V 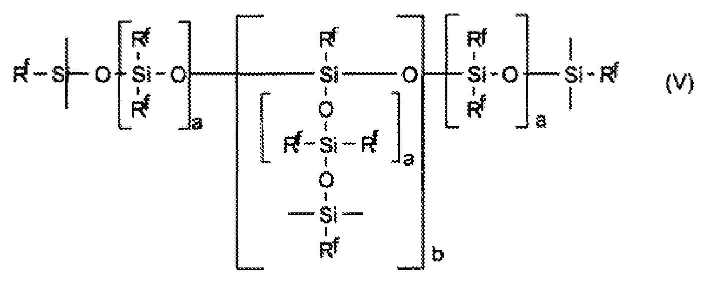 où
R^{f} peut être le radical R¹, et
R¹ représente un radical alkyle comprenant 1 à 16 atomes de carbone ou un radical aryle,
ou
R^{f} représente le radical R² ou R³, à condition qu'au moins un radical R^{f} représente le radical R², où
R² représente un radical polyéther de formule VI
(F)_{q}[O(C₂H_{4-d}R'_{d}O)ₘ(CₓH₂ₓO)ᵣZ]_{w} (VI)
où
d vaut 1 à 3,
m ≥ 1
q vaut 0 ou 1,
x vaut 2 à 10,
r ≥ 0
w vaut 1 à 4
F représente un radical hydrocarboné qui peut également être ramifié,
R' représente un radical hydrocarboné monovalent, qui est aromatique ou le cas échéant également un aromatique substitué,
Z représente un atome d'hydrogène ou un radical organique monovalent, tel qu'un radical alkyle ou ester d'alkyle ou d'aryle,
et R³ représente un radical polyéther de formule VI
(F)_{q}[O(C₂H_{4-d}R'_{d}O)ₘ(CₓH₂ₓO)ᵣZ]_{w} (VI)
où
d vaut 1 à 3,
m ≥ 0
q vaut 0 ou 1,
x vaut 2 à 10,
r > 1
w vaut 1 à 4
F représente un radical hydrocarboné qui peut également être ramifié,
R' représente un radical hydrogène, un radical hydrocarboné monovalent comprenant 1 à 18 atomes de carbone,
Z représente un atome d'hydrogène ou un radical organique monovalent, tel qu'un radical alkyle ou ester d'alkyle ou d'aryle,
et où, dans la formule V
b vaut un nombre de 0 à 8,
a vaut un nombre de 1 à 100, lorsque b vaut un nombre de 6 à 8,
a vaut un nombre de 1 à 200, lorsque b vaut un nombre de 3 à 6,
a vaut un nombre de 1 à 300, lorsque b vaut un nombre de 0 à 3.

3. Copolymères greffés selon la revendication 1 et 2, **caractérisés en ce que** les silicone-polyéthers B utilisés comme base de greffage sont décrits par la formule V, tous les radicaux R¹ étant des radicaux méthyle.

4. Copolymères greffés selon la revendication 1 à 3, **caractérisés en ce que** le composé éthyléniquement insaturé A est choisi dans le groupe des monomères éthyléniquement insaturés.

5. Copolymères greffés selon la revendication 1 à 3, **caractérisés en ce que** les composés éthyléniquement insaturés A sont choisis parmi un mélange de plusieurs monomères éthyléniquement insaturés A.

6. Copolymères greffés selon la revendication 1 à 3, **caractérisés en ce que** le composé éthyléniquement insaturé A est choisi dans le groupe des oléfines polymères présentant au moins un reste d'insaturation.

7. Copolymères greffés selon la revendication 1 à 3, **caractérisés en ce que** les composés éthyléniquement insaturés A sont choisis parmi un mélange de plusieurs monomères éthyléniquement insaturés A et dans le groupe des oléfines polymères présentant au moins un reste d'insaturation.

8. Copolymère greffé selon la revendication 1 à 7, **caractérisé en ce qu'**on polymérise entre 2 et 500% en poids de composés insaturés A en présence du silicone-polyéther.

9. Copolymères selon la revendication 1 à 8, **caractérisés en ce qu'**on utilise des composés réticulants choisis dans le groupe des dérivés, présentant au moins deux doubles liaisons éthyléniquement insaturées,
- d'esters d'acides carboxyliques éthyléniquement insaturés
- d'éthers d'alcools au moins divalents, de vinyléthers ou d'allyléthers,
- d'hydrocarbures aliphatiques linéaires, ramifiés, ou cycliques ou aromatiques, qui portent cependant au moins deux doubles liaisons, qui ne peuvent pas être conjuguées dans les hydrocarbures aliphatiques,
- d'amides de l'acide acrylique et méthacrylique et de N-allylamines d'amines au moins divalentes, de triallylamine ou de sels de triallylammonium,
- de composés N-vinyliques de dérivés d'urée, d'amides au moins divalents, de cyanurates ou d'uréthanes,
- de divinyldioxane, de tétraallylsilane ou de tétravinylsilane, ainsi que de mélanges de ces monomères.

10. Copolymères greffés selon l'une quelconque des revendications 1 à 9, **caractérisés en ce que** les dérivés de l'acide acrylique et méthacrylique sont décrits par la formule générale I
X-C(O)CR⁷=CHR⁶ (I)
où X est choisi dans le groupe des radicaux -OH, -OM, -OR⁸, NH₂, NHR⁸, N(R⁸)₂,
M représente un cation choisi dans le groupe formé par Na⁺, K⁺, Mg⁺⁺, Ca⁺⁺, Zn⁺⁺, NH₄⁺, alkylammonium, dialkylammonium, trialkylammonium et tétraalkylammonium et
les radicaux R⁸ peuvent être identiques ou différents, et sont choisis dans le groupe constitué par -H, des radicaux alkyle linéaires ou ramifiés en C₁-C₄₀, N,N-diméthylaminoéthyle, 2-hydroxyéthyle, 2-méthoxyéthyle, 2-éthoxyéthyle, hydroxypropyle, méthoxypropyle ou éthoxypropyle et
R⁷ et R⁶ sont choisis, indépendamment l'un de l'autre, dans le groupe constitué par -H, les chaînes alkyle linéaires ou ramifiées en C₁-C₈, méthoxy, éthoxy, 2-hydroxyéthoxy, 2-méthoxyéthoxy et 2-éthoxyéthyle.

11. Copolymères greffés selon l'une quelconque des revendications 1 à 8, **caractérisés en ce que** les monomères insaturés A sont choisis, à raison de 2 à 100% en poids, dans le groupe constitué par le styrène et d'autres dérivés du styrène ainsi que les mélanges de ces monomères.

12. Copolymères greffés selon l'une quelconque des revendications 1 à 9, **caractérisés en ce que** les monomères insaturés A sont choisis à raison de 2 à 100% en poids dans le groupe des esters vinyliques et allyliques d'acides carboxyliques linéaires en C₁-C₄₀, à chaîne ramifiée en C₃-C₄₀ ou carbocycliques en C₃-C₄₀, (par exemple l'acétate de vinyle, le propionate de vinyle, le néononanoate de vinyle, l'acide vinylnéoundécanoïque ou l'ester vinylique de l'acide t-butylbenzoïque), les halogénures de vinyle ou d'allyle ainsi que parmi les mélanges de ces monomères.

13. Utilisation de copolymères greffés selon les revendications 1 à 12 comme antimousses et agents de désaération pour des systèmes non aqueux à base d'huiles minérales ou de synthèse.

14. Utilisation des copolymères greffés selon la revendication 13 en une concentration inférieure à 150 ppm, de préférence entre 10 et 100 ppm, par rapport au composant huileux.
